# EUROPEAN PATENT APPLICATION

(11) **EP 1 953 852 A1**
(43) Date of publication of application: **06.08.2008**
(21) Application number: 06747768.7
(22) Date of filing: 27.04.2006
(51) Int. Cl.: H01M 4/58

(54) **CARBON-CONTAINING MATERIAL FOR A LITHIUM-ION BATTERY AND A LITHIUM-ION BATTERY**

(30) Priority: 30.09.2005 RU 2005131105
(71) Applicant: Filippov, Aleksandr Konstantinovich, St. Petersburg 191123 (RU); Fedorov, Mikhail Anatolievich, St. Petersubrg 195265 (RU); Filippov, Roman Aleksandrovich, St. Petersburg 191123 (RU)
(72) Inventor: Filippov, Aleksandr Konstantinovich, St. Petersburg 191123 (RU); Fedorov, Mikhail Anatolievich, St. Petersubrg 195265 (RU); Filippov, Roman Aleksandrovich, St. Petersburg 191123 (RU)
(74) Representative: Schmit, Christian Norbert Marie
(86) International application number: PCT/RU2006/000215
(87) International publication number: WO 2007/037717

(57) **Abstract**

A carbon-containing material for Li-ion accumulators relates to electrical engineering.

The carbon-containing material for a Li-ion accumulator includes a dispersed graphite and/or carbon nanostructures treated by gas plasma in a medium of inorganic gas or mixture of inorganic gases at a frequency of electrical discharge within the range of 13-40 MHz, electrical discharge power of 0.01-0.1 W/cm³ and pressure of inorganic gas or mixture of inorganic gases within the range of 0.2-1.13 Torr during 300 - 500 s.

A Li-ion accumulator includes a positive electrode, negative electrode, electrolyte and separator, in which one of electrodes is made on the base of the aforementioned carbon-containing material.

The material does not need using a complicated technology of its purification and production and, when used in electrodes of a Li-ion accumulator, it ensures a considerable increase of their electrical specific capacity.

## Description

### Pertinent art

The invention applied for relates to electrical engineering, and more specifically, to lithium ion accumulators.

Today Li-ion accumulators are widely used as energy source not only for portable electronic devices, but also for various transport vehicles. Rechargeable Li-ion accumulators provide both sufficient voltage and superb capacity and are characterized by an outstanding specific energy capacity in comparison with other types of rechargeable batteries.

### Prior art

After they had appeared in the 1980s, the first commercial Li-ion accumulators used metallic lithium as electrode and were extremely dangerous and unreliable. Nowadays lithium oxides (LiCoO₂, LiMn₂O₄, LiNiO₂) are usually used as cathode material; carbon materials (predominantly graphite) are employed as anode; and LiPF₆ and solvents consisting of cyclic and linear carbonates, as electrolyte. The operation principle of a Li-ion accumulator is based on intercalation of the anode by lithium ions during battery charging and on lithium deintercalation during its operation (discharging), when neutral lithium atoms lose energy, thus forming Li⁺ ions which diffuse toward the cathode. Graphite anodes store up lithium ions reliably and safely and have a theoretical limit value of specific capacity equal to 372 mAh/g, which corresponds to intercalation of six carbon atoms by one lithium atom, i.e. LiC₆ formula. A highly pure graphite (not worse than 99.99%) stores up lithium ions (during the first cycle) reliably and safely with a specific capacity close to the theoretical limit value and not less than 90% of efficiency of discharging for the first cycle. At present, however, typical commercial batteries have a specific capacity only within the range of 250-300 mAh/g.

That is why demand for Li-ion accumulators with an increased (at least, close to the theoretical limit of 372 mAh/g) specific capacity is steadily growing, which accounts for the search of new promising materials, in particular, carbon nanomaterials for the anode of a Li-ion accumulator.

The anode plays a decisive role for output characteristics of a Li-ion accumulator, being its most responsible part that determines capacity and life cycle. All producers of Li-ion accumulators are trying to develop a carbon anode material ensuring an essential improvement of accumulator characteristics at its justified cost.

Amorphous forms of carbon that allow storing up no less than 500 mAh/g in the first cycle and are highly promising for large-size batteries (H.Fujimoto, N.Chinnasamy, A.Mabuchi, and T.Kasuh. - Anode Materials for Li-ion Battery. - In Proc. Electrochemical Society Meeting, 2003, IMLB 12 Meeting). However, considerable capacity losses in the first cycle greatly impede employing such materials for small-size accumulators used in portable electronic devices.

A Li-ion accumulator is known (US Patent No. 6503660, IC HO1M 10/24, published January 1, 2003) which includes a cathode, lithium-salt electrolyte and anode on the base of carbon nanofibers (CNFs) of different structures: so-called lamellar (Platelet GNFs), rubbery (Ribbon GNFs) and "herringbone" types (Herringbone GNFs) with a crystallinity of no less than 97% and specific surface within the range of 20-120 m²/g.

A disadvantage of the known accumulator is low efficiency of the first-cycle discharge.

New carbon nanomaterials, in particular, carbon nanotubes (CNTs) having a combination of properties of graphite (high degree of crystallization) and amorphous-like carbon (high specific surface) are greatly promising for improving the anode material in a Li-ion accumulator.

For this reason the researchers pay much attention to single-wall carbon nanotubes (SWCNTs) that, theoretically, enable to attain great capacities.

A carbon-containing material for Li-ion accumulator is known (US Patent No. 6280697, IC C01B 031/00, published August 28, 2001) which includes at least 80 volume % of single-wall carbon nanotubes and is able to intercalate an alkali metal, in particular, lithium.

This carbon-containing material enables to increase specific electric capacity of the anode discharge in the first cycle up to 600 mAh/g (which corresponds to the intercalation formula Li_{1,6}C₆) owing to the use of purified SWCNTs. However, mechanical grinding of purified SWCNTs in a ball mill used to produce the material leads to their contamination by the material of balls (stainless steel, as a rule), which may necessitate repeating the purification operation already after the grinding. Another disadvantage is low effectiveness of the discharge in the first cycle (60%), strong reduction of capacity during subsequent (after the first one) cycles, and high cost of material, which accounts for high cost of the accumulator itself.

A Li-ion accumulator is known (US Application No. 20030099883, IC H01M 4/52, published May 29, 2003) which includes a plurality of electrodes such as anode and cathode, as well as electrolyte and separator, in which at least one electrode is made from a conductive material containing single-wall carbon nanotubes in the quantity of not more than 1.0 mass %.

Adding SWCNTs enabled to provide improved specific electric capacity from 265 mAh/g (without SWCNTs) to 290 mAh/g (with SWCNTs). Using a small addition of CNTs helps adapt the technology of producing CNT accumulators to the already existing technologies, and also allows lowering the requirements for purification of SWCNT materials as it becomes possible to deal with a material containing up to 1-5 mass % of metal. However, adding 1.0 mass % of SWCNT rises the cost of an accumulator by 10-20%.

To date, multi-wall carbon nanotubes (MWCNTs) have been most accessible, the majority of them being MWCNTs grown on catalysts' nanoparticles with the help of a variety of decompositions of carbons or carbon oxide.

Most close to the material applied for is a carbon-containing material for Li-ion accumulators (US Patent No. 5879836, IC H01M 4/60, published March 9, 1999) that includes carbon fibrils in the form of an aggregated or non-aggregated mass with particles of 0.1 to 100 nm in size and formed as hollow tubes having walls of 2 to 5 nm thick and an outer diameter of 3.5 to 75 nm.

Among disadvantages of the known material one should consider the use in it of MWCNTs with a high degree of graphitization and, consequently, a relatively low specific discharge capacity and extremely low effectiveness of the first discharge.

Most close to the accumulator applied for is a Li-ion accumulator (US Application No. 20040131937, IC H01M 4/58, published June 8, 2004) including an anode, cathode, electrolyte and membrane separator parting the anode from cathode. The anode in this case is made as a substrate with multi-wall carbon nanotubes grown on its surface and having an outer diameter of 10-100 nm. The cathode includes many nanoparticles of LiₓCo_{y}Ni_{z}O₂ composition with the size of particles from 10 to 100 nm.

Among disadvantages of the known Li-ion accumulator should be considered a very complicated technology of producing the anode and a high cost of the accumulator.

### Disclosure of the invention

The task of the invention applied for was to develop such a carbon-containing material and Li-ion accumulator on the basis thereof that would not require involving a complicated technology of its purification and production, and, when used in electrodes of Li-ion accumulators, would ensure an increase of their specific capacity with an insignificant change in the price.

The task set is solved by a group of inventions united by the inventor's general concept.

As far as the material is concerned, the task set is solved thanks to that a carbon-containing material for Li-ion accumulators contains dispersed graphite and/or carbon nanostructures treated by gas plasma in a medium of inorganic gas or mixture of inorganic gases at a frequency of electric discharge within the range of 13-40 MHz, power of electric discharge of 0.01-0.1 W/cm³ and pressure of inorganic gas or mixture of inorganic gases within the range of 0.2-1.13 Torr during 300 - 500 s.

Spheroidized graphite or graphite fibers can be used as a dispersed graphite.

Single- or multi-wall nanotubes, and also nanostructures such as "nanoonions", "nanohorns", "nanocones" and others, can be used as dispersed carbon nanostructures.

The task set is also solved by that a Li-ion accumulator includes a positive electrode, negative electrode, electrolyte and separator in which at least one of electrodes is made on the base of a carbon-containing material including dispersed graphite and/or carbon nanostructures treated by gas plasma in a medium of inorganic gas or mixture of inorganic gases at a frequency of electrical discharge within the range of 13-40 MHz, power of electrical discharge of 0.001-0.1 W/cm³ and pressure of inorganic gas or mixture of inorganic gases within the range of 0.2-1.13 Torr during 300 - 500 s.

Basing on the aforementioned carbon-containing material, a positive and/or negative electrode can be made for a Li-ion accumulator.

In producing electrodes of a Li-ion accumulator, a spheroidized graphite or graphite fibers can be used as dispersed graphite, while single- or multi-wall nanotubes can be used as dispersed carbon nanostructures.

In a Li-ion accumulator the use also can be made of a separator treated by gas plasma in a medium of inorganic gas or mixture of inorganic gases at a frequency of electrical discharge within the range of 13-40 MHz, power of electrical discharge of 0.01-0.1 W/cm³ and pressure of inorganic gas or mixture of inorganic gases within the range of 0.2-1.13 Torr during 300 - 500 s. Such treatment of the separator increases absorption of the electrolyte, which results in that the accumulator's capacity grows by 20-25%.

### Brief description of the drawings

The material can be treated on a unit presented on the drawing where:
Fig. 1 shows a version of the unit in longitudinal section;
Fig. 2 shows another version of the unit in longitudinal section.

### Best embodiment of the invention

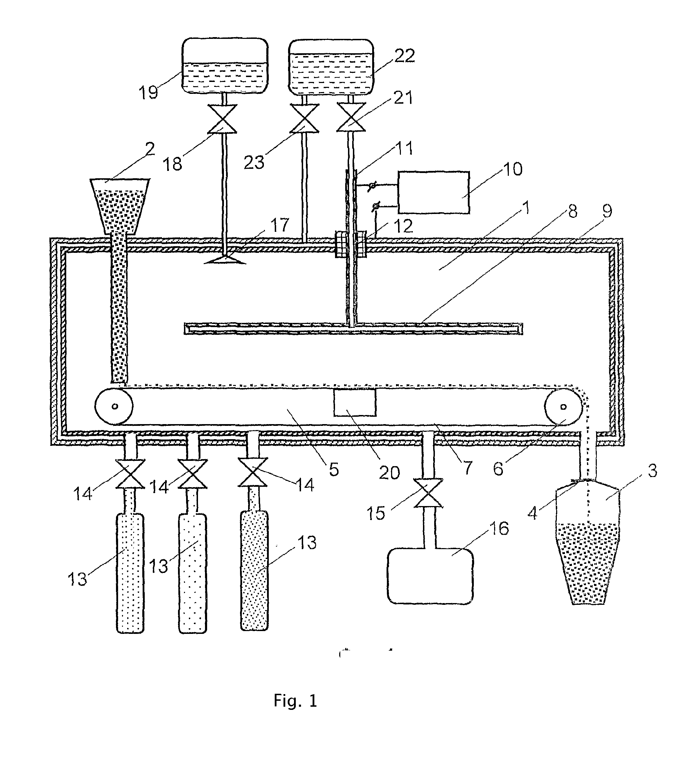

The unit for plasma treatment (fig. 1) comprises a plasma chamber **1** equipped with a loading hopper **2** and receiving hopper **3** with a gate **4.** Inside plasma chamber **1** a transporting mechanism **5** is placed in the form of a conveyor belt **7** mounted on rolls **6.** One of the rolls **6** is driven to rotate by a drive (not shown on the drawing). A flat electrode **8** is placed above the conveyor belt **7,** and the casing of plasma chamber **1** is used as the second electrode **9.** Electrodes **8** and **9** are connected to a high-frequency generator **10.** A holder **11** of electrode **8** passes through an insulator **12.** The unit is also equipped with several reservoirs **13** having valves **14** for feeding various inorganic gases, e.g., oxygen, nitrogen, argon, their mixture, and also air to the plasma chamber **1.** Through valve **15** the chamber **1** is connected with a vacuum system **16** in order to create a preset pressure in chamber **1.** Electrodes **8** and **9** are made from any known inert non-magnetic conducting material, for instance, from copper or aluminum. Plasma chamber **1** is equipped with a sprayer **17** connected via valve **18** with the water supply system **19;** conveyor belt **7** is equipped with a vibrator **20;** electrode **8** and walls of chamber **1** are made hollow for them to be cooled by circulation of a coolant supplied via valve **21** from reservoir **22** and returned via valve **23** (pipelines for supplying a coolant to the cavity of chamber **1** walls and returning the coolant from the cavity of electrode **8** are not shown on the drawing). Any known vibrator, whether mechanical, sonic or ultrasonic, can be used as vibrator **20.**

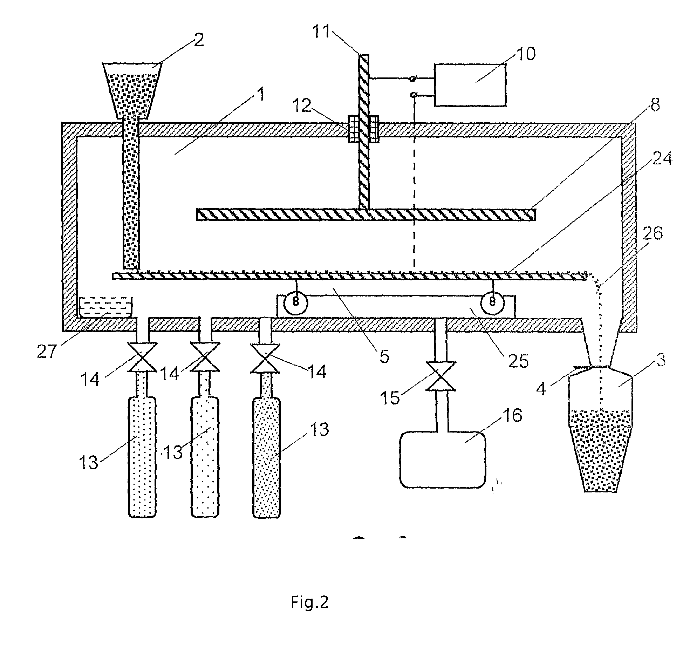

The unit shown on fig. 2 differs in that its transporting mechanism **5** as made as a trough **24** from stainless steel and is mounted on an eccentric drive **25** during whose rotation the trough **24** makes simultaneous alternate motions in vertical and horizontal planes, thus flipping material **26** being treated and displacing it toward the receiving hopper **3.** Plasma chamber **1** is also equipped with a water-filled reservoir **27,** while the trough **24** connected with the high-frequency generator **10** performs function of electrode **9.**

The material applied for a Li-ion accumulator is produced as follows.

Where necessary, the initial material in the form of a dispersed graphite (spheroidized graphite or graphite fibers) or in the form of carbon nanostructures is preliminarily reduced in a known grinding unit, e.g., in a ball or disk mill, vibrational mill or disintegrator. When metal balls or metal grinders are used, the powders (or granules) obtained are washed with an acid, e.g., HCl or HNO₃ in order to preliminarily remove admixtures after the milling. Then the material is dried in a drying oven or vacuum desiccator in the inert atmosphere and placed as a uniform layer not more than 1 mm thick on the conveyor belt 7 (fig. 1) or trough **24** with the drive **25** (fig. 2) of the unit's plasma chamber **1.** In plasma chamber **1,** a non-isometric and non-equilibrium high-frequency plasma discharge is created by applying voltage to electrodes **8** and 9 from the high-frequency generator **10.** The material is treated in a medium of inorganic gas or mixture of inorganic gases fed from reservoirs **13** at a pressure within the range of 0.2-1.13 Torr, electrical discharge frequency within the range of 13-40 MHz and electrical discharge power of 0.01-0.1 W/cm³ during 300 *-* 500 s. Air, argon, nitrogen, helium, oxygen, hydrogen, neon, xenon, carbon dioxide (CO₂), nitrogen dioxide (NO₂) chlorine- and fluorine-containing gases, water vapors, or their mixtures can be used as inorganic gas. When the material is treated for less than 300 s, its properties do not change, whereas if it is treated longer than 500 s a considerable quantity of material is lost (burnt out).

### Industrial applicability

Example 1. "Formula BT SLC 150" graphite of the *Superior Grafite Co.* (USA) was treated in a plasma discharge. The plasma discharge was created in the CO₂ medium at 0.5 Torr residual pressure, specific power of electrical discharge equal to 0.1 W/cm³, and frequency of 13 MHz. Graphite was placed as a layer about 0.5 mm thick on the tray of the unit's technological chamber. Treatment was carried out for 400 s. The material obtained as a result of plasma treatment was used to make the anode for a Li-ion accumulator. In making the accumulator, the use was made of a LP-40 MERCK electrolyte and MPPF (microporous polypropylene film) separator, while LiCoO₂ was used to make the cathode. For comparison, an accumulator with the anode from the same graphite, but not treated by a plasma discharge, was produced. The accumulator with the anode from material applied for had a specific electrical capacity of 400 mAh/g, the factor of active-mass utilization of 98%, while the accumulator with the anode from untreated graphite had the 290 mAh/g specific capacity and factor of active-mass utilization of 91%.

Example 2. Single-wall carbon nanotubes (SWCNTs) were placed in the plasma unit's plasma chamber (fig. 1) as a thin layer of 0.1-0.3 mm. The following conditions were created in the chamber: gas medium included argon and air at residual pressure of 0.2 Torr; specific power of electrical discharge equal to 0.01 W/cm³, and frequency of 27 MHz. Specific power value was chosen depending on the mass of treated material (10 g). Individual batches of single-wall carbon nanotubes were treated during 250 s, 300 s, 480 s, 600 s, 900 s and 1200 s. When treated for 250 s, the material did not change its properties. After treating for 600 s and 900 s, a considerable part of material (70-90 mass %) was lost, while after treatment during 1200 s the material was completely lost. After treatment during 300 s and 480 s the material losses did not exceed 35-40 mass %, while SWCNT properties changed dramatically and cardinally: the initial material with hydrophobic properties became hydrophilic, CCl₄ sorption increased by 30-50 mass %, and methanol sorption grew by 40-80 mass %.

An accumulator with the anode from untreated single-wall carbon nanotubes had the 980 mAh/g specific electrical capacity and 92% factor of active-mass utilization. And an accumulator with the anode from the applied-for material treated in plasma had the 2010 mAh/g specific capacity and factor of active-mass utilization equal to 98%.

Example 3. Multi-wall carbon nanotubes (MWCNTs) were placed in the unit's plasma chamber as a thin layer 0.3-0.5 mm thick. The following conditions were created in the chamber: argon, oxygen, hydrogen, helium and their mixtures were used as gas medium at the 1.13 Torr residual pressure, specific power of electric discharge of 0.07 W/cm³, frequency of 40 MHz, and treatment time of 500 s. The loss of nanotubes' mass did not exceed 40 mass %. The result of plasma treatment was that methane sorption increased by 30 mass % and hydrogen sorption by 12 mass %.

Example 4. Multi-wall carbon nanotubes with most common average lengths of 100-200 nm, outer diameters of 5-14 nm and inner diameters of 1.2-3.5 nm were preliminarily purified of nickel and iron micro-admixtures according to the known chemical procedure using HNO₃ acid, then dried in a disintegrator without applying metal materials and placed in the unit's plasma chamber as a homogeneous layer 0.4-0.5 mm thick. Treatment parameters were as follows: gas medium consisting of argon and air at residual pressure of 0.5 Torr, specific power of electric discharge of 0.05 W/cm³, frequency of 40 MHz, and treatment time of 450 s. After treatment the treated material was filled with helium and argon during 2700 s at atmospheric pressure in order to exclude any possibility of its contamination and preserve the properties achieved. Anodes for Li-ion accumulators were made from the treated material. One LP-40 MERCK electrolyte and MPPF separator were used to produce 5 accumulators. LiCoO₂ was used for cathodes. Accumulators had the following parameters: electrical specific capacity of 543-617 mAh/g and factor of active-mass utilization of 95% to 98%.

Example 5. The material obtained as a result of plasma treatment just like in example 1, i.e. "Formula BT SLC 150" graphite produced by the *Superior Grafite Co.* (USA) was used to make an anode and cathode for Li-ion accumulators. The cathode contained LiCoO₂ with addition of the aforementioned material in the amount of 20 mass %. To make the accumulator, a LP-40 MERCK electrolyte and MPPF separator (microporous polypropylene film) was used. For comparison, an accumulator was made with a LiCoO₂ cathode and anode from the same graphite untreated by a plasma discharge. The accumulator with an anode and cathode made with the use of material applied for had a specific electrical capacity of 480 mAh/g and factor of active-mass utilization equal to 98%, while the accumulator with an anode from untreated graphite and a cathode from LiCoO₂ had a specific capacity of 290 mAh/g and factor of active-mass utilization equal to 91%.

Example 6. An anode for a Li-ion accumulator was made from the material of multi-wall carbon nanotubes treated as in example 3. In addition, a MPPF separator was treated in a plasma discharge in the CO₂ medium at the 0.7 Torr residual pressure, specific power of electrical discharge equal to 0.1 W/cm³ and frequency of 27 MHz during 400 s.

A LP-40 MERCK electrolyte was used in making the accumulator and LiCoO₂ was used for cathodes. The accumulator had the following parameters: electrical specific capacity of 668 mAh/g and 98% factor of active-mass utilization. In comparison with a Li-ion accumulator, which used a separator untreated in a plasma discharge, specific electrical capacity of the accumulator with a separator treated by a plasma discharge grew by 25%.

Using the material applied for in making accumulators increases the cost of accumulators by only 10-15%, while the accumulator's electrical parameters improve by 50-100%.

It should be also noted that, in practice, producing an accumulator does not change the technology of its production.

## Claims

1. A carbon-containing material for a Li-ion accumulator, which includes dispersed graphite and/or carbon nanostructures treated by gas plasma in a medium of inorganic gas or mixture of inorganic gases at a frequency of electrical discharge within the range of 13-40 MHz, electrical discharge power of 0.01-0.1 W/cm³ and pressure of inorganic gas or mixture of inorganic gases within the range of 0.2-1.13 Torr during 300 - 500 s.

2. A carbon-containing material according to p. 1, whereby a spheroidized graphite is used as the aforementioned dispersed graphite.

3. A carbon-containing material according to p. 1, whereby graphite fibers are used as the aforementioned dispersed graphite.

4. A carbon-containing material according to p. 1, whereby single-wall nanotubes are used as the aforementioned dispersed carbon nanostructures.

5. A carbon-containing material according to p. 1, whereby multi-wall nanotubes are used as the aforementioned dispersed carbon nanostructures.

6. A lithium ion accumulator including a positive electrode, negative electrode, electrolyte and separator, in which at least one of electrodes is made on the base of the carbon-containing material including a dispersed graphite and/or carbon nanostructures treated by gas plasma in a medium of inorganic gas or mixture of inorganic gases at a frequency of electric discharge within the range of 13-40 MHz, electrical discharge power of 0.01-0.1 W/cm³ and pressure of inorganic gas or mixture of inorganic gases within the range of 0.2-1.13 Torr during 300 - 500 s.

7. An accumulator according to p. 6, whereby the positive electrode is made on the base of the aforementioned carbon-containing material.

8. An accumulator according to p. 6, whereby the negative electrode is made on the base of the aforementioned carbon-containing material.

9. An accumulator according to p. 6, whereby spheroidized graphite is used as the aforementioned dispersed graphite.

10. An accumulator according to p. 6, whereby graphite fibers are used as the aforementioned dispersed graphite.

11. An accumulator according to p. 6, whereby single-wall nanotubes are used as the aforementioned dispersed carbon nanostructures.

12. An accumulator according to p. 6, whereby multi-wall nanotubes are used as the aforementioned dispersed carbon nanostructures.

13. An accumulator according to p. 6, whereby the use is made of a separator treated by gas plasma in a medium of inorganic gas or mixture of inorganic gases at a frequency of electrical discharge within the range of 13-40 MHz, electrical discharge power of 0.01-0.1 MHz and pressure of inorganic gas or mixture of inorganic gases within the range of 0.2-1.13 Torr during 300 - 500 s.
